# EUROPEAN PATENT SPECIFICATION

(11) **EP 3 089 427 B1**
(45) Date of publication and mention of the grant of the patent: **06.09.2023**
(21) Application number: 15165248.4
(22) Date of filing: 27.04.2015
(51) Int. Cl.: H04L 69/22, H04L 67/53, H04L 67/61

(54) **CONTROLLING DATA EXCHANGE BETWEEN A MOBILE COMMUNICATION NETWORK AND A DATA PROVIDER**
STEUERUNG DER DATENÜBERTRAGUNG ZWISCHEN EINEM MOBILKOMMUNIKATIONSNETZ UND EINEM DATENANBIETER
COMMANDE D'ÉCHANGE DE DONNÉES ENTRE UN RÉSEAU DE COMMUNICATION MOBILE ET UN FOURNISSEUR DE DONNÉES

(43) Date of publication of application: 02.11.2016
(73) Proprietor: Vodafone Holding GmbH, 40213 Düsseldorf (DE)
(72) Inventor: HAFEZ, Ahmed Fouad Adel Ahmed, 40215 Düsseldorf (DE)
(74) Representative: Jostarndt Patentanwalts-AG

(56) References cited:
- DE-A1-102007 007 545
- US-A1- 2006 172 722
- US-A1- 2015 085 664
- JAIN A TERZIS GOOGLE N SPRECHER S ARUNACHALAM NOKIA NETWORKS K SMITH G KLAS VODAFONE A: "Requirements and reference architecture for Mobile Throughput Guidance Exposure; draft-sprecher-mobile-tg-exposure-req-arch -01.txt", REQUIREMENTS AND REFERENCE ARCHITECTURE FOR MOBILE THROUGHPUT GUIDANCE EXPOSURE; DRAFT-SPRECHER-MOBILE-TG-EXPOSURE-REQ-ARCH -01.TXT, INTERNET ENGINEERING TASK FORCE, IETF; STANDARDWORKINGDRAFT, INTERNET SOCIETY (ISOC) 4, RUE DES FALAISES CH- 1205 GENE, 20 February 2015 (2015-02-20), pages 1-12, XP015104867, [retrieved on 2015-02-20]
- Anonymous: "The Mobile Network > How encryption threatens mobile operators, and what they can do about it", , 22 January 2015 (2015-01-22), XP055224326, Retrieved from the Internet: URL:http://the-mobile-network.com/2015/01/ how-encryption-threatens-mobile-operators- and-what-they-can-do-about-it/ [retrieved on 2015-10-29]

## Description

### Field of the invention:

The invention relates to a method of controlling data exchange between a mobile communication network and a data provider. The invention further relates to a communication system. The invention finally relates to a corresponding computer program product.

### Background of the invention:

Current management of data exchange or data traffic is based on the understanding of the HTTP traffic. Moving from HTTP protocol to HTTPs protocol which is an encrypted version of the HTTP protocol may impose significant challenges especially on operators of mobile communication networks.

The document REQUIREMENTS AND REFERENCE ARCHITECTURE FOR MOBILE THROUGHPUT GUIDANCE EXPOSURE; DRAFTSPRECHER-MOBILE-TG-EXPOSURE-REQ-ARCH-01.TXT, INTERNET ENGINEERING TASK FORCE, IETF; STANDARDWORKINGDRAFT, INTERNET SOCIETY (ISOC) 4, RUE DES FALAISES CH- 1205 GENE, 20 February 2015, pages 1-12 (JAIN A TERZIS GOOGLE N SPRECHER S ARUNACHALAM NOKIA NETWORKS K SMITH G KLAS VODAFONE A) describes the requirements and reference architecture for a mobile throughput guidance exposure mechanism that can be used to assist TCP in cellular networks, ensuring better network efficiency and enhanced service delivery performance.

DE 10 2007 007545 A1 discloses a mobile network broker for exchanging data/Information between at least one mobile device assigned to the mobile network and at least one home network device assigned to a home network. In addition, in US 2006/172722 A1, a method and an apparatus for prioritizing encrypted traffic at an intermediate node within a communications network are described. In particular, the described method and apparatus allow to process voice data packets at a higher priority than other data packet types.

### Summary of the invention:

It's thus an object of the present invention to provide an improved method of controlling data exchange between a mobile communication network and a data provider.

According to the present invention, a method of controlling data exchange between a mobile communication network and a data provider as well a network entity according the independent claims are provided. Further preferred embodiments of the present invention are defined in the dependent claims.

According to a first aspect a method of controlling data exchange between a mobile communication network and a data provider is provided. The method comprises the steps of:
- receiving first identification information based on identified characteristics of data in a network entity,
- receiving the data in the network entity,
- determining in the network entity whether the data is encrypted,
- assigning the first identification information to the data, wherein the first identification information comprises unencrypted information about the characteristics of the encrypted data,
- analyzing the first identification information depending on the client or the data provider in the network entity,
- adapting the first identification information depending on the analysis of the first identification information,
- providing by means of the network entity second identification information, which is the adapted first identification information to the data provider,
- adapting, by the data provider, the data exchange of the encrypted data between the mobile communication network and the data provider by means of the network entity depending on a result of an analysis of the second identification information.

The network entity is preferably part of the core network of the mobile communication network or between the Radio Access Network and the interconnect with other Networks. Locating the network entity in the core network of the mobile communication network enables control and adaption of data exchange in upload and download direction. The first identification information or part thereof may be provided or added by means of the mobile communication device of a client or user of the mobile communication network, a radio entity (e.g. base station) of the mobile communication network or a data provider. The data provider may be connected to the core network of the mobile communication network via, for example, the Internet. The first identification information may be provided based on analysis of the data to be exchanged which is performed by means of the device or entity submitting the data. The first identification information may comprise meta data which describes data exchanged between the mobile communication network and the data provider. The meta data may characterize the data by describing, for example, whether the data related to a phone call, a short message service, video data, audio data or the like is exchanged. The first identification information may further comprise additional characteristics of the, for example, video data as resolution, download rate, size of the related data packages and the like. The first identification information simplifies control or management of data exchange by providing immediate access to the essential characteristics of the exchanged data. It is no longer necessary to analyze the data as such. Adapting data exchange includes the kind of data exchange (e.g. prioritized) or adapting the data or data packets (e.g. provide higher resolution) or adapting the first identification information. The mobile communication network may comprise the GSM, UMTS, LTE network or the like.

The first identification information is especially useful in case that the data as such is encrypted as, for example, in case of HTTPs based data exchange. The data to be exchanged may, for example, be provided by the data provider or a client of the mobile communication network.

The method may further comprise the steps of:
- Verifying sender of the information, and/or
- Verifying receiver or the client on the other end of the communication channel.

Confirming by assigning or re-assigning the first identification information to the encrypted data enables control of encrypted data exchange or modifying it or adding additional information to the first identification information or even transforming the first identification information into a different format. It may also communicate it further to other system or end point using a different mechanism. Encryption of data disables analysis of data exchange between the data provider and the mobile communication networks. Encryption may have the effect that traffic management may be less predictable, video optimization may be completely useless and Web optimization would not work. Key mechanisms which are used today would not work and may cause substantial risks with respect to network quality. Adding, for example, first identification information in a header to data packages comprising encrypted data, enables control of the data exchange especially with respect to the encrypted data without access to the data as such. The header would comprise unencrypted first identification information about the characteristics of the encrypted data such that the first identification information can be read or analyzed by means of the network entity such that control of data exchange is enabled.

Analysis of the first identification information by means of the network entity may comprise verification of the first identification information. Verification may be performed by comparing the first identification information with reference data. The first identification information may, for example, comprise information with respect to the data provider or client of the mobile communication network. Data provider like, for example, YouTube usually provide video data such that there would be an inconsistency if the first identification information comprises the information that the data provider is YouTube but the encrypted data is related to exchange of short message data within a short message service. Data exchange between the data provider and the mobile communication network may in this case be adapted by refusing transmission of the encrypted data or, for example, adapting transmission capacity in accordance with either the identified data provider or the indicated kind of encrypted data related to the data exchange depending on the probability of correctness of the related parts of the first identification information. The network entity may even submit related information to the data provider about inconsistency of first identification information in order to enable correction if necessary.

The step of adapting the data exchange may further comprise prioritizing delivery of the data to a client or user of the mobile communication network. Several users within one communication cell served by one base station may, for example, request by means of their mobile communication devices different kind of data at the same time. Priority may be adapted depending on sensitivity of presentation of the requested with respect to, for example, bit rate assigned to the respective user. Video data may, for example, be provided at a higher bit rate, wherein non-sensitive data traffic maybe throttled.

The step of adapting data exchange may comprise adapting the data which is exchanged between the data provider and the mobile communication network. The first identification information may, for example, comprise information that video data is comprised in encrypted data packages. The first identification information further comprises a data rate of the video is 1 Mbps at a resolution of 720p. The network entity compares first identification information with reference data with the result that the video is being compressed as a video with a resolution of 720p usually requires higher bandwidth. The network entity may throttle other types of traffic that has no impact on user experience to allow for the video to take more bandwidth, such that the client or customer using a mobile communication device in the mobile communication network can enjoy higher resolution of the subsequent video. In the same time and before the network entity may take such a decision it will first check the customer policy and if he/she is entitled to have these enhancements and if his/her bundle won't be exhausted from this increase in throughput.

The method may further comprise the additional steps of:
- receiving the data and the first identification information from a client of the mobile communication network, and
- providing by means of the network entity second identification information to the data provider.

The client may be a user with a mobile communication device in the mobile communication network. The first identification information may be added by means of the mobile communication device or another radio entity (e.g. base station) of the mobile communication network. First identification information which may be added by the radio entity may be information regarding the location of the mobile communication device. The data and the first identification information are submitted via the radio entity to the network entity. The network entity may check the source of the data and the first identification information and/or the recipient of the data. The network entity may adapt the first identification information depending on a customer policy with clients (e.g. high data throughput allowed) such that the data provider is enabled to provide the data service which may be requested by the client by means of the data transmitted to the data provider in accordance with the customer policy indicated in the second identification information. The network entity may alternatively or in addition adapt the first identification information depending on a data provider policy. The network entity may, for example, add information about user experience or other data which may enable the data provider to improve data service to the first identification information. The network entity may in an alternative case remove parts of the first identification information or even block the first identification information such that the second identification information comprises essentially no information about or related to the data exchange between the client of the mobile communication network and the data provider.

The second identification information may be provided independently to the data provider from the data to be exchanged. The network entity may for example analyze a multitude of first identification information related to encrypted data which are sent from the mobile communication network to one or more data provider. Results of the analysis may be provided by means of the second identification information in an anonymized form to the data provider or providers.

The data which is exchanged between the mobile communication network and the data provider may be adapted by means of the network entity depending on the client, the data provider or the first identification information. A client or user of the mobile communication network may, for example, request to download video data. The first identification information may comprise characteristics of the video as lengths, data bit rate, resolution and the like such that the network entity is enabled to check whether it is possible to download of video within a bundle (data volume, throughput and the like) booked by the client. The network entity may adapt for example the data rate and/or the resolution by means of providing second identification information replacing respective first identification information in order to avoid that transmission of the video is throttled in an unacceptable way because of violation of the limits of the bundle. The kind of adapting may be governed by respective policy which may be combined with the bundle and stored in the network entity or a device within the core network of the mobile communication network being communication with the network entity. Similarly, data volume provided by the data provider may, for example, be reduced or even blocked depending on time of delivery based on the first identification information provided by the data provider or the client. It may thus be possible to avoid congestion of the mobile communication network due to excessive data load caused by one data provider. Upload of data by means of the client may be controlled in a similar way.

According to a further aspect of the invention a communication system according to claim 7 is provided, wherein said system comprises a network entity a communication network and a data provider. The network entity comprises a receiver, a transmitter, an analyzer and an adapting device. The receiver is adapted to receive first identification information and data. The analyzer is adapted to analyze the first identification information. The network entity is adapted to determine whether the data is encrypted. The network entity is further adapted to assign modified first identification information to the data. The first identification information comprises unencrypted information about the characteristics of the encrypted data. The adapting device is adapted to adapt the data exchange of the encrypted data between the mobile communication network and the data provider depending on the result of the analysis of the first identification information and by modifying the first identification information. The transmitter is adapted to transmit information. The information transmitted by means of the transmitter may comprise the data, data adapted by means of the network entity, first identification information or second identification information as described above. The network entity may be adapted to perform method steps as described in the dependent claims. The network entity may be, for example, a separate server, being comprised by the core network or a distributed arrangement wherein parts of the functionalities are performed by different devices within the core network or any place down to the RAN.

The analyzer and the adapting device may be single devices comprising one or more processors or processing devices and corresponding memories or memory devices. The analyzer and the adapting device may alternatively be a distributed arrangement in the core network comprising two or more processing devices and memory devices. The analyzer and the adapting device are adapted to perform the corresponding method steps as described in the dependent claims and the corresponding description as described above.

According to a further aspect of the invention a first network system is provided. The first network system comprises the network entity as described above and a radio entity. The radio entity is adapted to identify characteristics of the data, and the radio entity is further adapted to add first identification information based on the identified characteristics of the data. The radio entity may comprise a mobile communication device, a base station or a combination of both.

According to another aspect of the invention a second network system is provided. The second network system comprises the network entity as described above and a data providing entity. The data providing entity is adapted to identify characteristics of the data, and the data providing entity is further adapted to add first identification information based on the identified characteristics of the data. The data providing entity may be a server or the like under the control of the data provider.

The data providing entity may be single devices comprising one or more processors or processing devices and corresponding memories or memory devices. The data providing entity may alternatively be a distributed arrangement within the hardware architecture of the data provider comprising two or more processing devices and memory devices.

The invention further relates to a computer program according to claim

It shall be understood that a preferred embodiment of the invention can also be any combination of the dependent claims with the respective independent claim.

Further advantageous embodiments are defined below.

### Brief description of the drawings:

These and other aspects of the invention will be apparent from and elucidated with reference to the embodiments described hereinafter.

The invention will now be described, by way of example, based on embodiments with reference to the accompanying drawings.

In the drawings:
Fig. 1 shows a principal sketch of method of controlling data exchange between a mobile communication network and a data provider
Fig. 2 shows a principal sketch of a first communication system
Fig. 3 shows a principal sketch of a second communication system
Fig. 4 shows a principal sketch of a first network entity
Fig. 5 shows a principal sketch of a second network entity
Fig. 6 shows a principal sketch of a third network entity

In the Figures, like numbers refer to like objects throughout. Objects in the Figures are not necessarily drawn to scale.

### Detailed description of embodiments:

Various embodiments of the invention will now be described by means of the Figures.

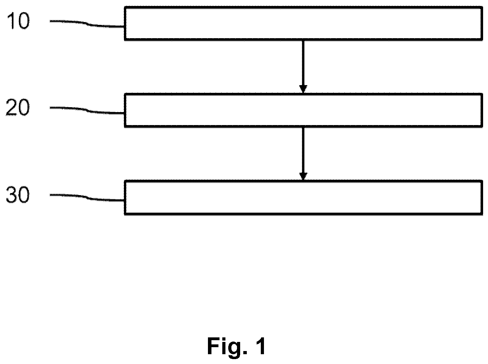

Fig. 1 shows a principal sketch of method of controlling data exchange between a mobile communication network 100 and a data provider 155. In step 10 first identification information 131, 133 is received in a network entity 200 based on identified characteristics of data 121, 122 in a network entity. The first identification information 131, 133 is analyzed in the network entity 200 in step 20. Data exchange between the mobile communication network 100 and data provider 155 is adapted by means of the network entity 200 depending on a result of the analysis of the first identification information 131, 133 in step 30. The data exchange comprises all information which is exchanged between the mobile communication network 100 and the data provider 155.

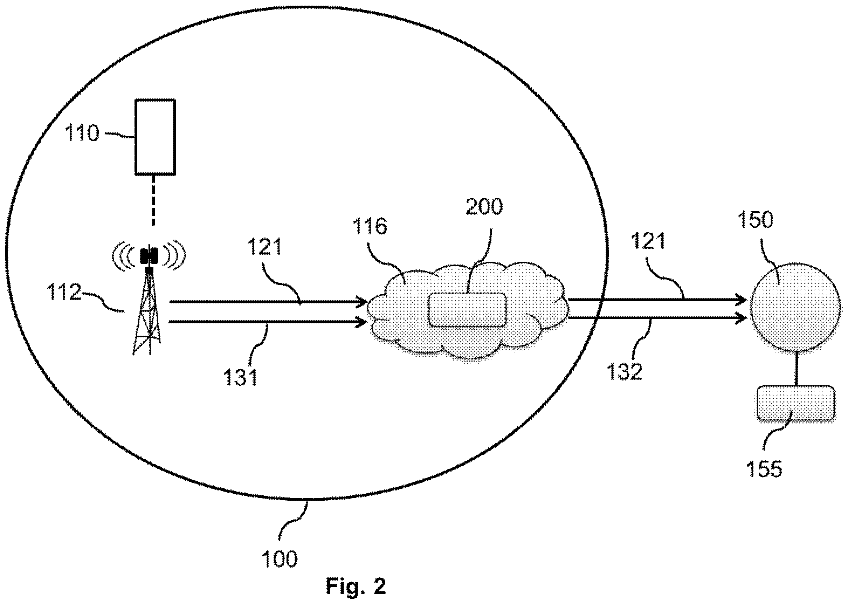

Fig. 2 shows a principal sketch of a first communication system. The first communication system comprises the core network 116 which is connected to a multitude of radio entities 112 (base stations). Each base station serves a cell of the mobile communication network 100 with one or more mobile communication devices 110. The core network 116 further comprises a network entity 200. The mobile communication device 110 sends encrypted data 121 and first identification information 131 comprising characteristics of the encrypted data 121 via the base station to the core network 116. The first identification information 131 is added to the data 121 by means of header functionalities within the transmission control protocol (TCP). The data 121 and the first identification information 131 is received in the network entity 200. The network entity 200 may comprise the deep packet inspection (DPI) functionality and the policy and charging rules function (PCRF). The network entity 200 analyses the first identification information 131 and provides second identification information 132 together with the data 121 via the Internet 150 to the data provider 155. The second identification information 132 is used by means of the data provider 155 in order to adapt or optimize data services provided by the data provider 155. It can thus, for example, be avoided that the data provider 155 tries to deliver HD videos, which get stalled due to lack of available bandwidth. The network entity 200 enables control about identification information which is submitted to the data provider.

The configuration shown in Fig. 2 enables a large number of use cases that could be abstracted in the ability to have defined policies in the core network 116 that manages the information sent to the data provider 155 and add/remove this information as well. This can be done in various ways, one way is to use the PCRF and TDF functions (Policy and Deep packet inspection) to control the first identification information 131 being send, amend it, delete it,..etc.. It could also be done through a Multi-Service-Proxy or via any node in the Gi-LAN that is capable of manipulating TCP fields and has an interface to the PCRF. Another alternative could be any node inline of traffic between the Radio entity and the Interconnect point to the Internet or to other network or to content providers. In the following some use cases are described which are enabled by means of the first communication network as shown in figure 2.

Use case 1: First identification information 131 comprising throughput guidance information is only provided to selected data providers 155. The network entity 200 removes first identification information 131 if the data provider 155 indicates that the first identification information 131 is not used by the respective data provider 155.

Use case 2: A data provider 155 e.g. video content provider would like to have an enhanced user experience on the mobile communication network 100. The data provider 155 would like to receive the first or second identification information 131, 132 (throughput guidance). The destination IPs of the data providers 155 can be provisioned in the PCRF/DPI to allow the throughput guidance to be sent to the data providers 155. The data providers 155 can be charged for this service. The intervals where data providers 155 can receive this throughput guidance can be defined by the network provider of the mobile communication network 100. Submission or transfer of second identification information 132 may in this case be independent from the Radio Network frequency of sending the first identification information 131 (throughput guidance). Network load caused by throughput guidance can thus be adapted by means of the network entity 200 within the core network 116 in accordance with the need of the data provider 155.

Use case 3: A SIM which is coupled to mobile communication device 110 is provisioned as child SIM. In some markets (e.g. UK) the mobile network providers are obliged to enforce adult content filters (ACF) on these SIMs. Since data traffic may be encrypted mobile network provider may fail to filter inappropriate traffic especially towards sites that contain a mix of adult and non-adult content. The network entity 200 (PCRF) has the customer policy of administration for children and families (ACF) and communicates this to the DPI over a suitable interface (e.g. Gx/Sd interface). The DPI can then provide second identification information 132 comprising a flag set to "1" if this SIM is a child SIM. Data providers 155 in cooperation can check this flag and apply ACF measures. The data provider 155 can read the flag to automatically redirect the user to safe search, without need for user intervention or leaving any room for under age children to bypass it.

Use case 4: A customer using a mobile communication device 110 in the mobile communication network 100 has utilized 80% of his/her bundle and is attempting to play an HD video, the video length and through put is supported by the network at this time (>20Mbps), which would result in eating up the remaining of the bundle before the whole HD video gets downloaded. As the network entity 200 is aware of the bundle state and the characteristics of the video by means of the firs identification information, the network entity 200 will reduce the throughput guidance to a lower value than the actual one on radio to avoid the customer bundle exhaustion during the Video (2 Mbps). This can be done using the credit control information from the PCRF and setting a policy on a maximum throughput for video after reaching a defined bundle threshold.

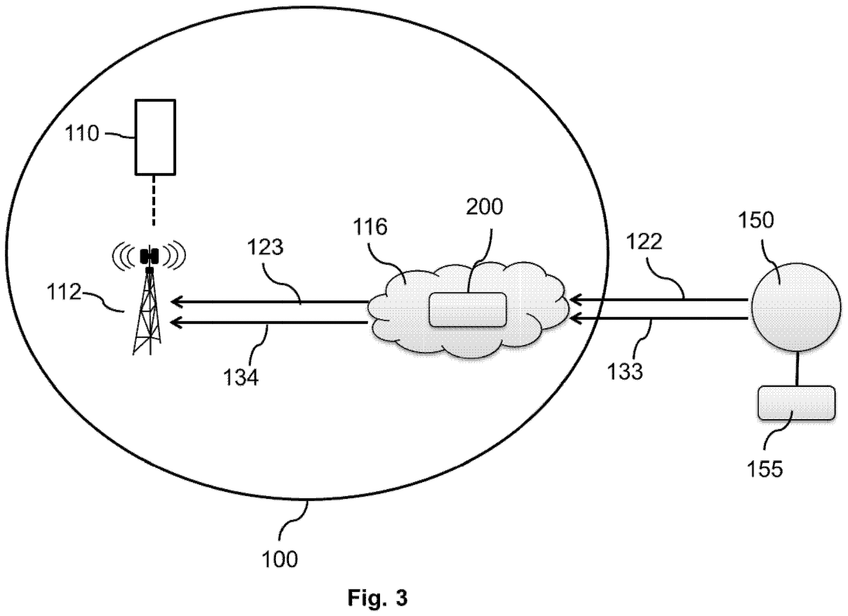

Fig. 3 shows a principal sketch of the second communication system. The second communication system is arranged in a similar way as the first communication system shown in Fig. 2. The data provider 155 adds in this case first identification information 133 to encrypted data 122 by means of a data providing entity. The first identification information 133 and the encrypted data 122 are received in the network entity 200. The first identification information 133 comprises meta data and information from the data provider 155 (Flow type, data throughput required for the flow to sustain, content age adequacy,...etc.) which is essential to identify the delivery requirements and allocate corresponding resources within the mobile communication network 100. The network entity 200 further enables to take into account additional aspects, for example, if the data 122 requires 1Mbps throughput to be efficiently delivered, while the customer using mobile communication device 110 is out of bundle. This means that the network entity 200 enables to resolve two conflicting policies, one suggesting 1Mbps and the other is throttling the customer traffic to 32 or 64Kbps. The network entity 200 thus avoids waste of resources and creating a false state of user experience. The first identification information 133 arriving from data provider 155, is checked, verified and passed by means of the network entity 200 based on a decision making process tying the customer policy, network state, time of day and other parameters to decide on the best delivery mechanism. The first identification information 133 may be added in the same or a similar way as described above with respect to the first communication network shown in and discussed with respect to Fig. 2.

The configuration shown in Fig. 3 enables a large number of use cases. Examples of such use cases are:
Use case 1: User A is requesting content from a data provider 155 (e.g. Facebook), this data may be content like Video, audio, pictures upload or just browsing. First identification data 133 inclusion would identify the type of flow and requirements this flow needs, this allows mobile communication network 100 to take the right prioritization and congestion management decision. If the traffic of the user was video then the traffic may get a higher priority than other types of traffic, while in all other cases for this site it remains with the default best effort.

Use case 2: Network congestion management, assuming all encrypted traffic or data 122 is labelled and non-encrypted traffic is already known. When a congestion state takes place, non-sensitive traffic types may be throttled by means of the network entity 200 to provide enough bandwidth for sensitive traffic types (e.g. video). First identification information 133 and traffic labelling would prevent the mobile communication network 100 from sacrificing sensitive traffic by means of the network entity 200. This would improve overall user experience

Use case 3: A user of the mobile communication device 110 may browse a data provider 155 like Amazon. The user gets a normal best effort priority during browsing. If the user decides on a purchase and gets into its steps, Amazon could raise the priority of that traffic by flagging by means of first identification information 133 as "purchase transaction" and make a commercial model with the provider of the mobile communication network to provide higher priority and low latency to this traffic, so the transaction is ensured without errors. In this case the network entity 200 (DPI or MSP) would read the flag, verify the commercial model, send information to the online charging system to charge Amazon based on the agreed prices, then the network entity 200 flags the packets with the higher priority by means of second identification information 134 either by using quality of service class identifiers (QCIs) or using differentiated service code point (DSCP) marking techniques. At the end of the transaction the overall performance could be measured by Amazon servers and/or Browsers and they could verify the service level agreement (SLA).

Use case 4: A user is requesting video traffic from a data provider 155, the data provider 155 has provided the following first identification information 133: type: Video, data rate: 1Mbps, Resolution: 720p. The network entity 200 analyses this first identification information 133 data against known references. According to the result of the analysis it seems that the video is being compressed as 720p usually requires higher bandwidth. This can make the network entity 200 throttle other types of traffic that has no impact on user experience to allow for the video to take more bandwidth, so the customer can enjoy higher resolution of the subsequent video. In the same time and before the network entity 200 would take such a decision it will first check the customer policy and if he/she is entitled to have these enhancements and if his/her bundle would not be exhausted from this increase in throughput. The data 122 (video) is adapted in this case based on the first identification information 133 such that adapted data 123 (video with higher resolution) together with accordingly adapted second identification information 134 is submitted via base station 112 to mobile communication device 110 of the user.

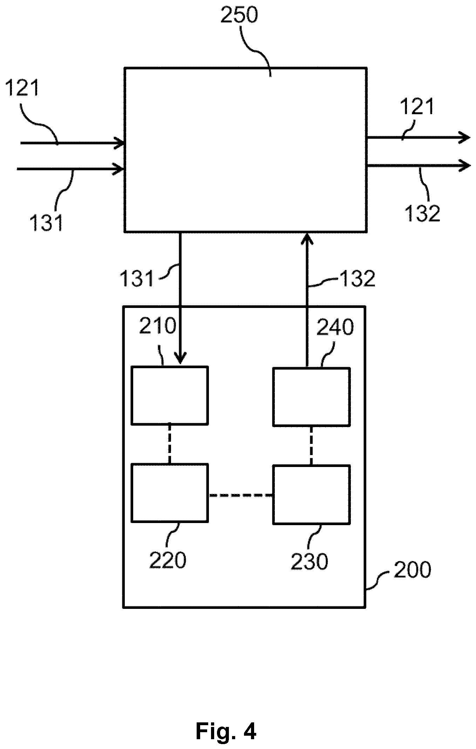

Fig. 4 shows a principal sketch of a first network entity 200 with a transfer unit 250. The transfer unit 250 receives data 121 and first identification information 131. The transfer unit 250 separates first identification information 131 and transfers the first identification information to the first network entity 200. The first identification information 131 is received by means of receiver 210 which transfers the first identification information 131 to analyzer 220. The analyzer 220 analyses the first identification information 131 and submits the result of the analysis together with the first identification information to adapting device 230. Adapting device 230 adapts the first identification information 131 depending on the IP address pointing to a specific data provider 155. Second identification information 132 which is the adapted first identification information 131 is transferred to transmitter 240. Transmitter 240 sends the second identification information 132 to the transfer unit 250. The transfer unit ties second identification information 132 to data 121 and submits the second identification information 132 and the data via the Internet 150 to data provider 155.

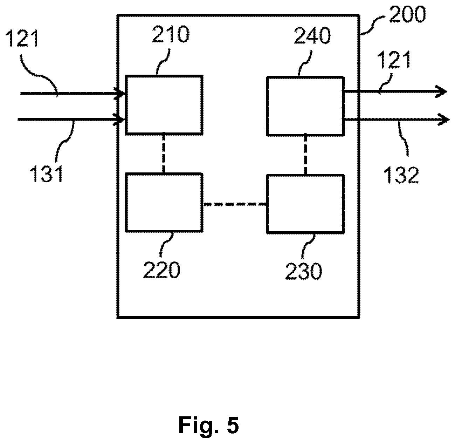

Fig. 5 shows a principal sketch of a second network entity 200. The functionality of the second network entity 200 is nearly the same as the first network entity 200 shown in Fig. 4. The difference is that the receiver 210 receives data 121 and the first identification information 131. The data 121 is transferred via analyzer 220 and adapting device 230 to transmitter 240. Header information comprising the first identification information 131 of encrypted data 121 is adapted based on the analysis of analyzer 220 by means of adapting device 230 such that the header information of the encrypted data 121 comprises second identification information 132 when transferred to data provider 155 by means of transmitter 240.

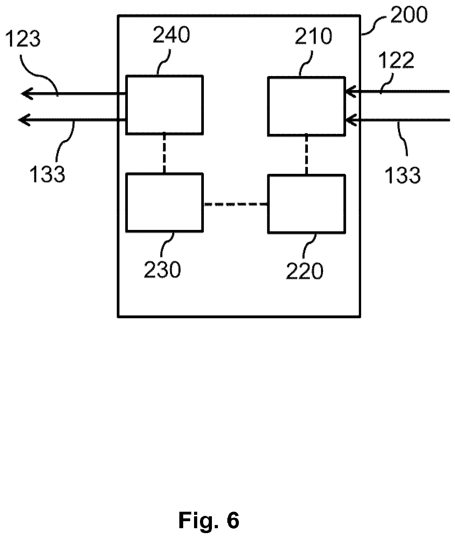

Fig. 6 shows a principal sketch of a third network entity 200. The configuration of the network entity 200 in Fig. 6 is similar to the configuration of the second network entity 200 shown in Fig. 5. Receiver 210 receives data 122 and first identification data 133 from data provider 155 via the Internet 150. Data 122 and first identification data 133 are transferred to analyzer 220 which is adapted to analyze the first identification information 133. The result of the analysis is provided to adapting device 230. Adapting device 230 adapts data 122 to adapted data 123 and submits adapted data 123 and first identification information 133 to transmitter 240. Transmitter 240 sends adapted data 123 and first identification information 133 by means of a base station 112 to a mobile communication device 110 of the user.

It may also be possible to provide a combined network entity 200 comprising the features as described with respect to Fig. 5 and 6.

It may further be possible to adapt the network entity 200 shown in Fig. 6 such that receiver 210 submits data 122 directly to transmitter 240 and first identification information 133 to analyzer 220 and adapting device 230. The first identification information 133 may in this case be adapted such that data 122 and second identification information 123 is submitted to mobile device 110.

It's a basic idea of the present invention to provide a method and corresponding devices or systems which enable control of data exchange between a mobile communication network 100 and a data provider 155 by means of a network entity 200 which is preferably arranged within the core network 116 of the mobile communication network 100. The network entity 200 arranged in the core network 116 may have the advantage that control of data exchange may be enabled at the interface between mobile communication network 100 and Internet 150. The effort of control of the data exchange may thus be reduced in comparison to control by means of, for example, each base station being in radio communication with mobile communication devices 110. Control is enabled by means of first identification information 131, 133 describing characteristics especially of encrypted data 121, 122.

While the invention has been illustrated and described in detail in the drawings and the foregoing description, such illustration and description are to be considered illustrative or exemplary and not restrictive.

From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. The mere fact that certain measures are recited in mutually different dependent claims does not indicate that a combination of these measures cannot be used to advantage.

Any reference signs in the claims should not be construed as limiting the scope thereof.

### List of reference numerals:

- 10: step of receiving first identification information
- 20: step of analyzing first identification information
- 30: step of adapting data exchange
- 100: mobile communication network
- 110: mobile communication device
- 112: radio entity
- 116: core network
- 121, 122: data
- 123: adapted data
- 131, 133: first identification information
- 132, 134: second identification information
- 150: internet
- 155: data provider
- 200: network entity
- 210: receiver
- 220: analyzer
- 230: adapting device
- 240: transmitter
- 250: transfer unit

## Claims

1. A method of controlling data exchange between a mobile communication network (100) and a data provider (155) comprising the steps of:
- receiving first identification information (131, 133) based on identified characteristics of data (121, 122) in a network entity (200),
- receiving the data (121, 122) in the network entity (200),
- determining in the network entity (200) whether the data (121, 122) is encrypted,
- assigning the first identification information (131, 133) to the data (121, 122), wherein the first identification information (131, 133) comprises unencrypted information about the characteristics of the encrypted data (121, 122),
- analyzing the first identification information (131, 133) depending on the client (110) or the data provider (155) in the network entity (200),
- adapting the first identification information (132, 134) depending on the analysis of the first identification information (131, 133),
- providing by means of the network entity (200) second identification information (132, 134), which is the adapted first identification information to the data provider (155),
- adapting, by the data provider, the data exchange of the encrypted data (121, 122) between the mobile communication network (100) and data provider (155) by means of the network entity (200) depending on a result of an analysis of the second identification information (131, 133).

2. The method according to any of the preceding claims, wherein the step of analyzing the first identification information (131, 133) comprises the step of:
- verifying the first identification information (131, 133).

3. The method according to any of the preceding claims, wherein the step of adapting the data exchange comprises the step of:
- prioritizing delivery of the data (121, 122) to a client (110) of the mobile communication network (100).

4. The method according to any one of claims 2 or 3, wherein the first identification information (131, 133) is verified by comparing the first identification information (131, 133) with reference data.

5. The method according to claim 1, wherein the second identification information (132, 134) is provided independently to the data provider (155) from the data (121, 122) to be exchanged.

6. The method according to any one of claims 1 or 5, wherein the method comprises additional step of:
- adapting the data exchange of the encrypted data (121, 122) by means of the network entity (200) depending on the client (110), the data provider (155) or the first identification information (131, 133).

7. A network system comprising a network entity (200), a mobile communication network (100), and a data provider (155), the network entity (200) being for controlling data exchange between the mobile communication network (100) and the data provider (155), the network entity (200) comprising a receiver (210), a transmitter (240), an analyzer (220) and an adapting device (230), wherein the receiver (210) is adapted to receive first identification information (131, 133) and data (121, 122) and the network entity (200) is adapted to provide second identification information (132, 134), which is the adapted first identification information to the data provider (155), wherein the analyzer (220) is adapted to analyze the first identification information (131, 133) depending on the client (110) or the data provider (155), wherein the network entity (200) is adapted to determine whether the data (121, 122) is encrypted, wherein the network entity (200) is adapted to assign modified first identification information (131, 133) to the data (121, 122), said modified first identification information corresponding to the adapted first identifcation information, wherein the first identification information (131, 133) comprises unencrypted information about the characteristics of the encrypted data (121, 122), wherein the data provider (155) is adapted to adapt data exchange of the encrypted data (121, 122) between the mobile communication network (100) and the data provider depending on a result of an analysis of the second identification information (131, 133) and wherein the transmitter (240) is adapted to transmit information.

8. The network system according to claim 7 further comprising a radio entity (112), wherein the radio entity (112) is adapted to identify characteristics of the data (121, 122), and the radio entity is further adapted to add the first identification information (131, 133) to the data (121, 122) based on the identified characteristics of the data (121, 122).

9. The network system according to claim 7 further comprising a data providing entity, wherein the data providing entity is adapted to identify characteristics of the data (121, 122), and the data providing entity is further adapted to add the first identification information (131, 133) to the data (121, 122) based on the identified characteristics of the data (121, 122).

10. A computer program product comprising code means which can be saved on at least one memory device of the network entity (200) of the network system according to claim 7, the code means being arranged such that the method according to any one of claims 1 to 6 is performed by means of a processing device of the network entity (200) according to claim 7 upon execution of the code by the network entity (200).

## Patentansprüche

1. Verfahren zur Steuerung des Datenaustauschs zwischen einem mobilen Kommunikationsnetz (100) und einem Datenanbieter (155), das die folgenden Schritte umfasst:
- Empfang erster Identifikationsinformationen (131, 133) auf der Grundlage identifizierter Merkmale von Daten (121, 122) in einer Netzeinheit (200),
- Empfang der Daten (121, 122) in der Netzeinheit (200),
- Bestimmung in der Netzeinheit (200), ob die Daten (121, 122) verschlüsselt sind,
- Zuordnen der ersten Identifikationsinformationen (131, 133) zu den Daten (121, 122), wobei die ersten Identifikationsinformationen (131, 133) unverschlüsselte Informationen über die Eigenschaften der verschlüsselten Daten (121, 122) umfassen,
- Analyse der ersten Identifikationsinformationen (131, 133) in Abhängigkeit von dem Client (110) oder dem Datenanbieter (155) in der Netzeinheit (200),
- Anpassung der ersten Identifikationsinformation (132, 134) in Abhängigkeit von der Analyse der ersten Identifikationsinformation (131, 133),
- Bereitstellung einer zweiten Identifizierungsinformation (132, 134), die die angepasste erste Identifizierungsinformation für den Datenanbieter (155) ist, durch die Netzeinheit (200),
- Anpassen des Datenaustauschs der verschlüsselten Daten (121, 122) zwischen dem Mobilkommunikationsnetz (100) und dem Datenanbieter (155) mittels der Netzentität (200) durch den Datenanbieter in Abhängigkeit von einem Ergebnis einer Analyse der zweiten Identifikationsinformationen (131, 133).

2. Verfahren nach einem der vorhergehenden Ansprüche, wobei der Schritt des Analysierens der ersten Identifikationsinformation (131, 133) den Schritt umfasst:
- die Überprüfung der ersten Identifizierungsinformationen (131, 133).

3. Verfahren nach einem der vorhergehenden Ansprüche, wobei der Schritt des Anpassens des Datenaustauschs den Schritt umfasst:
- Priorisierung der Lieferung der Daten (121, 122) an einen Client (110) des mobilen Kommunikationsnetzes (100).

4. Verfahren nach einem der Ansprüche 2 oder 3, wobei die erste Identifikationsinformation (131, 133) durch Vergleich der ersten Identifikationsinformation (131, 133) mit Referenzdaten verifiziert wird.

5. Verfahren nach Anspruch 1, wobei die zweite Identifikationsinformation (132, 134) dem Datenanbieter (155) unabhängig von den auszutauschenden Daten (121, 122) bereitgestellt wird.

6. Verfahren nach einem der Ansprüche 1 oder 5, wobei das Verfahren einen zusätzlichen Schritt umfasst:
- Anpassen des Datenaustauschs der verschlüsselten Daten (121, 122) mittels der Netzeinheit (200) in Abhängigkeit von dem Client (110), dem Datenanbieter (155) oder der ersten Identifikationsinformation (131, 133).

7. Netzwerksystem mit einer Netzwerkinstanz (200), einem mobilen Kommunikationsnetzwerk (100) und einem Datenanbieter (155), wobei die Netzwerkinstanz (200) zum Steuern des Datenaustauschs zwischen dem mobilen Kommunikationsnetzwerk (100) und dem Datenanbieter (155) dient, wobei die Netzwerkinstanz (200) einen Empfänger (210), einen Sender (240), einen Analysator (220) und eine Anpassungsvorrichtung (230) umfasst, wobei der Empfänger (210) angepasst ist, um erste Identifikationsinformationen (131, 133) und Daten (121, 122) zu empfangen, und die Netzwerkeinheit (200) angepasst ist, um zweite Identifikationsinformationen (132, 134) bereitzustellen, die die angepassten ersten Identifikationsinformationen für den Datenanbieter (155) sind, wobei der Analysator (220) angepasst ist, um die ersten Identifikationsinformationen (131, 133) in Abhängigkeit von dem Client (110) oder dem Datenanbieter (155) zu analysieren, wobei die Netzwerkentität (200) angepasst ist, um zu bestimmen, ob die Daten (121, 122) verschlüsselt sind, wobei die Netzwerkentität (200) angepasst ist, um modifizierte erste Identifikationsinformationen (131, 133) den Daten (121, 122) zuzuordnen, wobei die modifizierten ersten Identifikationsinformationen den angepassten ersten Identifikationsinformationen entsprechen, wobei die ersten Identifikationsinformationen (131, 133) unverschlüsselte Daten umfassen, wobei die ersten Identifikationsinformationen (131, 133) unverschlüsselte Informationen über die Eigenschaften der verschlüsselten Daten (121, 122) umfassen, wobei der Datenanbieter (155) angepasst ist, den Datenaustausch der verschlüsselten Daten (121, 122) zwischen dem Mobilkommunikationsnetz (100) und dem Datenanbieter abhängig von einem Ergebnis einer Analyse der zweiten Identifikationsinformationen (131, 133) anzupassen, und wobei der Sender (240) angepasst ist, Informationen zu übertragen.

8. Das Netzwerksystem nach Anspruch 7 umfasst ferner eine Funkeinheit (112), wobei die Funkeinheit (112) dafür ausgelegt ist, Merkmale der Daten (121, 122) zu identifizieren, und die Funkeinheit ferner dafür ausgelegt ist, die erste Identifikationsinformation (131, 133) zu den Daten (121, 122) auf der Grundlage der identifizierten Merkmale der Daten (121, 122) hinzuzufügen.

9. Das Netzwerksystem nach Anspruch 7 umfasst ferner eine datenbereitstellende Instanz, wobei die datenbereitstellende Instanz geeignet ist, Merkmale der Daten (121, 122) zu identifizieren, und die datenbereitstellende Instanz ferner geeignet ist, die erste Identifikationsinformation (131, 133) zu den Daten (121, 122) basierend auf den identifizierten Merkmalen der Daten (121, 122) hinzuzufügen.

10. Ein Computerprogrammprodukt mit Codemitteln, die auf mindestens einer Speichereinrichtung der Netzwerkeinheit (200) des Netzwerksystems nach Anspruch 7 gespeichert werden können, wobei die Codemittel so ausgestaltet sind, dass das Verfahren nach einem der Ansprüche 1 bis 6 des bei Ausführung des Codes durch die Netzeinheit (200) mittels einer Verarbeitungseinrichtung der Netzwerkeinheit (200) nach Anspruch 7 durchgeführt wird.

## Revendications

1. Méthode de contrôle de l'échange de données entre un réseau de communication mobile (100) et un fournisseur de données (155) comprenant les étapes suivantes :
- recevoir les premières informations d'identification (131, 133) basées sur les caractéristiques identifiées des données (121, 122) dans une entité de réseau (200),
- réception des données (121, 122) dans l'entité de réseau (200),
- déterminer dans l'entité de réseau (200) si les données (121, 122) sont cryptées,
- attribuer les premières informations d'identification (131, 133) aux données (121, 122), les premières informations d'identification (131, 133) comprenant des informations non chiffrées sur les caractéristiques des données chiffrées (121, 122),
- analyser les premières informations d'identification (131, 133) en fonction du client (110) ou du fournisseur de données (155) dans l'entité de réseau (200),
- adapter la première information d'identification (132, 134) en fonction de l'analyse de la première information d'identification (131, 133),
- fournir, au moyen de l'entité de réseau (200), une deuxième information d'identification (132, 134), qui est la première information d'identification adaptée au fournisseur de données (155),
- adapter, par le fournisseur de données, l'échange de données cryptées (121, 122) entre le réseau de communication mobile (100) et le fournisseur de données (155) au moyen de l'entité de réseau (200) en fonction du résultat d'une analyse des deuxièmes informations d'identification (131, 133).

2. Procédé selon l'une quelconque des revendications précédentes, dans lequel l'étape d'analyse des premières informations d'identification (131, 133) comprend l'étape suivante :
- vérifier la première information d'identification (131, 133).

3. La méthode selon l'une des revendications précédentes, dans laquelle l'étape d'adaptation de l'échange de données comprend l'étape suivante :
- donner la priorité à la livraison des données (121, 122) à un client (110) du réseau de communication mobile (100).

4. La méthode selon l'une des revendications 2 ou 3, dans laquelle la première information d'identification (131, 133) est vérifiée en comparant la première information d'identification (131, 133) avec des données de référence.

5. Méthode selon la revendication 1, dans laquelle la deuxième information d'identification (132, 134) est fournie au fournisseur de données (155) indépendamment des données (121, 122) à échanger.

6. La méthode selon l'une des revendications 1 ou 5, dans laquelle la méthode comprend une étape supplémentaire :
- adapter l'échange de données cryptées (121, 122) au moyen de l'entité de réseau (200) en fonction du client (110), du fournisseur de données (155) ou des premières informations d'identification (131, 133).

7. Système de réseau comprenant une entité de réseau (200), un réseau de communication mobile (100) et un fournisseur de données (155), l'entité de réseau (200) étant destinée à contrôler l'échange de données entre le réseau de communication mobile (100) et le fournisseur de données (155), l'entité de réseau (200) comprenant un récepteur (210), un émetteur (240), un analyseur (220) et un dispositif d'adaptation (230), dans lequel le récepteur (210) est adapté pour recevoir les premières informations d'identification (131, 133) et les données (121, 122) et l'entité de réseau (200) est adaptée pour fournir les secondes informations d'identification (132, 134), qui sont les premières informations d'identification adaptées au fournisseur de données (155), dans lequel l'analyseur (220) est adapté pour analyser les premières informations d'identification (131, 133) en fonction du client (110) ou du fournisseur de données (155), dans lequel l'entité de réseau (200) est adaptée pour déterminer si les données (121, 122) sont cryptées, dans lequel l'entité de réseau (200) est adaptée pour attribuer des premières informations d'identification modifiées (131, 133) aux données (121, 122), lesdites premières informations d'identification modifiées correspondant aux premières informations d'identification adaptées dans lesquelles les premières informations d'identification (131, 133) comprennent des informations non chiffrées sur les caractéristiques des données chiffrées (121, 122), dans lequel le fournisseur de données (155) est adapté pour adapter l'échange de données des données chiffrées (121, 122) entre le réseau de communication mobile (100) et le fournisseur de données en fonction d'un résultat d'une analyse des secondes informations d'identification (131, 133) et dans lequel l'émetteur (240) est adapté pour transmettre des informations.

8. Le système de réseau selon la revendication 7 comprend en outre une entité radio (112), dans laquelle l'entité radio (112) est adaptée pour identifier les caractéristiques des données (121, 122), et l'entité radio est en outre adaptée pour ajouter la première information d'identification (131, 133) aux données (121, 122) sur la base des caractéristiques identifiées des données (121, 122).

9. Le système de réseau selon la revendication 7 comprend en outre une entité de fourniture de données, dans laquelle l'entité de fourniture de données est adaptée pour identifier les caractéristiques des données (121, 122), et l'entité de fourniture de données est en outre adaptée pour ajouter la première information d'identification (131, 133) aux données (121, 122) sur la base des caractéristiques identifiées des données (121, 122).

10. Produit programme d'ordinateur comprenant des moyens de code pouvant être enregistrés sur au moins un dispositif de mémoire de l'entité de réseau (200) du système de réseau selon la revendication 7, les moyens de code étant agencés de manière à ce que la méthode selon l'une quelconque des revendications 1 à 6 soit exécutée au moyen d'un dispositif de traitement de l'entité de réseau (200) selon la revendication 7 lors de l'exécution du code par l'entité de réseau (200).
